# EUROPEAN PATENT SPECIFICATION

(11) **EP 2 435 374 B1**
(45) Date of publication and mention of the grant of the patent: **04.01.2017**
(21) Application number: 10740253.9
(22) Date of filing: 26.05.2010
(51) Int. Cl.: C02F 1/78, C02F 1/48

(54) **WATER PURIFICATION PLANT**
WASSERAUFBEREITUNGSANLAGE
INSTALLATION DE PURIFICATION D'EAU

(30) Priority: 29.05.2009 IT RM20090272
(43) Date of publication of application: 04.04.2012
(73) Proprietor: I.RI.DE. s.r.l., 43126 Parma (IT)
(72) Inventor: FERRAGUZZI, Mattia, I-61032 Fano (IT); UGUZZONI, Marco, I-41043 Modena (IT); PATARCHI, Alberto, I-61048 Sant'Angelo in Vado (PS) (IT); CASALINI, Danilo, 61032 Fano (PS) (IT); CASAMENTI, Moreno, 48012 Glorie di Bagnacavallo (RA) (IT)
(74) Representative: Rapisardi, Mariacristina
(86) International application number: PCT/IB2010/001234
(87) International publication number: WO 2010/136873

(56) References cited:
- WO-A1-2007/115412
- DE-U1-202007 015 082
- US-A- 4 197 200
- US-A- 5 498 347
- US-A1- 2008 272 064

## Description

The present invention refers to a water purification plant.

In particular, the present invention can be used for purifying water of different kinds, such as for example drinking water, domestic wastewater, industrial wastewater or water used in swimming pools and aquatic parks.

As known, water from natural sources such as rivers or lakes is utilized, depending on the intended use, either directly or indirectly after having undergone suitable treatments.

These treatments, such as purification, are carried out for eliminating foreign or polluting substances from water.

Generally, the purification of urban wastewater is performed by means of a process with subsequent stages, during which specific actions and reactions take place: oxidations (physical, mechanical, microbiological), reductions (microbiological), filtering, disinfections (sodium hypochlorite, peracetic acid, ultraviolet radiations, etc.).

In particular, in plants used for purifying drinking water, the water is made to flow through a grid of different size for retaining branches and large-size solid products.

The filtered water is sent to a storage where an homogenization of the same takes place.

From the storage, the water is made to flow through a deoiler having the function of separating oils possibly present in the water and hydrocarbons in general. In this step a first polluting step arises, as the deoiling filter has to be periodically cleaned (replacement of filters and/or other equipments) and the oil and/or hydrocarbons have to be collected and separately disposed.

After deoiling, the water flows through a desander filter having the function of retaining solid particles such as: earth, sand, stones, etc.

This treatment gives rise to a further polluting step caused by the large amount of water required for the filter backwashing, which has to be sent to another purification plant. It shall also be taken into account that the quartzite in the filters has to be periodically replaced and disposed in a dump site.

At this stage, the water is sent to one or more sedimentation basins having the function of retaining fine particles by means of a flocculation process.

In particular, chemicals are introduced for creating a floating bed suitable for retaining micro-particles to be removed. Chemicals for controlling the "pH" value are also added.

This step gives rise to a further polluting step because of the formation of sludge, which has to be disposed in a dump site with related additional plant, supply and monitoring costs.

Furthermore, a denitrification and deferrization step can be provided, both processes being performed by means of an ion exchange resin system.

Also this step gives rise to pollution because of the periodical replacement of the exhausted resins, which have to be disposed in a dump site. Moreover, a large amount of water is required for backwash and has than to be sent to and treated at another purification plant.

The water further undergoes an oxidation step for starting to reduce the bacterial load; in this step chlorine and/or other chlorine-based formulations are used.

The excess of chlorine or similar products has to be removed from the water together with the reaction residues which have been generated, with related drawbacks in terms of pollution. Furthermore, the active coal is periodically replaced and is disposed in a dump site or sent to regeneration.

Solid particles not retained by the active carbon filter are blocked by a further sand filter, which also is periodically replaced and disposed in a dump site.

Finally, the treated water is collected in one or more storage tank where further chlorine is introduced to disinfect the water ready for distribution through the mains of the water system.

These plants have relevant drawbacks deriving from the combined use of chemicals.

In fact, as mentioned above, the purification processes produce polluting agents which have to be disposed, with related economical and management drawbacks.

Furthermore, it shall be noted that the use of chemical additives involves high electrical energy consumption and high costs for the plant and, above all, for managing such chemicals.

There are also water treatment plants which provide for ozone treatments during a particular step.

For example, US2008/0272064 describes rainwater treatment device comprising a rainwater storage tank and treatment tank. Rainwater is delivered to treatment tank where ozone is injected at regular time intervals. The ozone kills the bacteria and the transition metals of the oxides.

EP2055680 describes instead a water purification plant comprising a filter unit arranged at a treatment unit for pre-cleaning the water. The treatment unit has a closed circulation with a reaction container, an ozonizer that is subordinated to the reaction container and/or a cavitator that is subordinated to the ozonizer. The reaction container is coupled through two inlets with the filter unit, suitable for reversing the water supply for filter unit between the inlets in such a way that the filter unit is flown through in opposite directions of water. The inlets of the filter unit are assigned a predetermined flow direction.
The outlet of the filter unit is arranged opposite to the inlets and has a backwashing pipeline that is coupled with the closed circulation of the reaction container, and a pure water outlet that is coupled with a dirt water inlet of the reaction container. The coupling of the backwash pipeline with the closed circulation of the ozonizer is arranged in the flow direction. The backwash pipeline is connected with a free flow and has a self-cleaning fine filter. The inlet of the filter unit has a device for ozone removal. The outlet and inlet of the filter unit have a valve that is connected with a control unit in such a way that the flow direction of the water is changeable in the filter unit.

The Applicant has noted that the plants of the kind described in US2008/0272064 are intended exclusively for rainwater treatment in domestic buildings and thus cannot be suitable for treating any kind of water, such as for example domestic wastewater, industrial wastewater or water used in swimming pools and aquatic parks.

The Applicant has further noted that the plants of the kind described in US2008/0272064 have a kind of ozone generator using ultraviolet radiation or liquid oxygen. These generators produce an ozone amount exceeding the amount needed for treatment and, for avoiding to release ozone in the surrounding environment, they necessarily require a filter for removing the excess of ozone downstream the treatment basin.

Furthermore, the Applicant has noted that in known systems as well as in those mentioned above, in which air is not fed to the generator not directly from the environment, but instead through compressors and/or blowers, the air warms up and it is thus necessary to provide suitable air cooling systems and proper filters arranged upstream the generator for eliminating air impurities.

US 2008/272064 A1 discloses a water purification plant according to the preamble of claim 1.

In this framework, the technical problem underlying the present invention is to provide a water purification plant which overcomes the above-mentioned drawbacks of the prior art.

In particular, it is an object of the present invention to provide a water purification plant capable of avoiding the use of chemicals to be introduced in the water and the related management of such products.

A further object of the present invention is to provide a water purification plant capable of avoiding the production of polluting waste which requires further disposal operations.

Another object of the present invention is to provide a water purification plant capable of reducing the surface and space occupied.

Moreover, another object of the present invention is to provide a water purification plant which does not require air cooling systems and filters for

removing air impurities arranged upstream the said ozone generator.

Finally, another object of the present invention is to provide a water purification plant which does not require filters for removing the excess of ozone downstream the treatment basin.

The technical problem set forth and the specified objects are substantially accomplished by a water purification plant comprising the technical features mentioned in one or more of the appended claims.

Further features and advantages of the present invention shall become clearer from an indicating, and thus non-limiting, description of a preferred but not exclusive embodiment of a water purification plant, as shown in the attached drawings, in which:
- figure 1 shows a schematic lateral view of a water purification plant according to the present invention; and
- figure 2 shows a block diagram of the operation of the purification plant of figure 1.

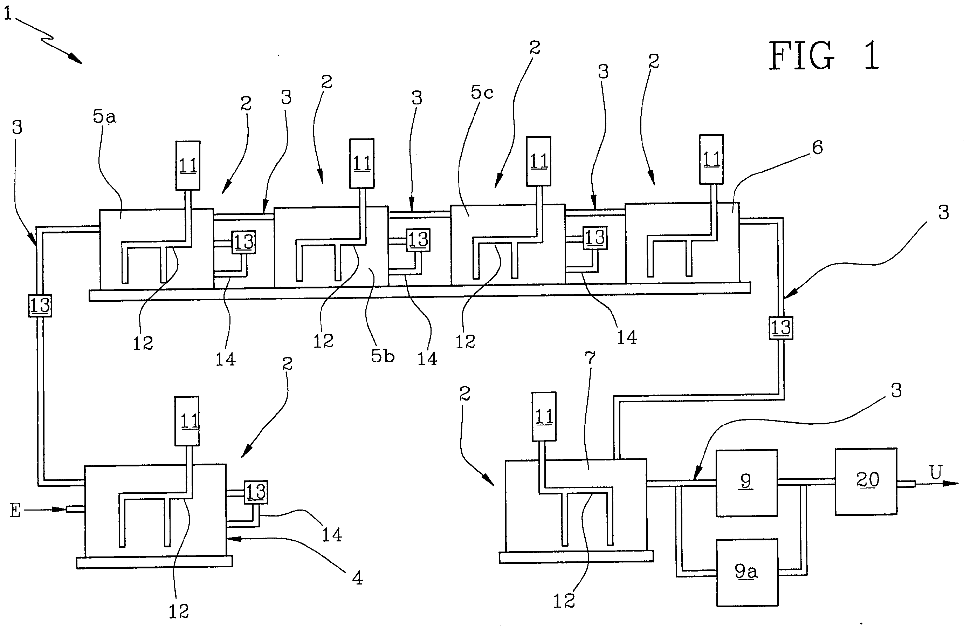

Referring to attached figure 1, a water purification plant, for example for domestic wastewater purification, is globally indicated with reference numeral 1.

In particular, in figure 1 it is shown, only for illustrative and thus non-limiting purposes, a purification plant for water of different kinds, such as for example drinking water.

The plant 1 comprises at least one filtration means for a predetermined amount of water to be purified. Such filtration means is suitable for removing solid particles from the water to be purified, and feeds a plurality of collection basins 2 arranged one after the other and suitably connected by connection pipelines 3.

Advantageously, the filtration means comprises a pair of filtering elements, respectively arranged upstream and downstream the basins 2.

As shown in figure 1 by way of example, the filtration means downstream the basins 2 consists of a tangential filter, employing a double filtration system 9 and 9a for performing a fine filtration, thus increasing water quality.

In more detail, according to the sequence shown in the attached figures, water is first sent to a storage basin 4, suitable for allowing the disgregation of oils, fats and hydrocarbons present in the water to be purified.

Downstream the storage basin 4 there is a plurality of oxidation basins 5a, 5b, 5c one after the other, for a set sequence of oxidation steps. Advantageously, three oxidation basins 5a, 5b, 5c are provided, each suitable for a specific oxidation step. After the third oxidation basin there is a sedimentation basin 6, in which the disinfection process starts more intensively.

The sedimentation basin 6 is provided with a recirculation pipeline 10a extending from the sedimentation basin 6 itself to the first oxidation basin 5a. In this way, a closed circuit connection is created for bringing back upstream the oxidation basins 5a, 5b, 5c a predetermined amount of water leaving the sedimentation basin 6, such as to equalize the oxidation content.

Advantageously, the water sent back to the oxidation basins 5a, 5b, 5c is further mixed for equalizing the oxidation content and obtaining a same biomass and ozone concentration.

Subsequently, the water is sent to a disinfection basin 7, arranged downstream the sedimentation basin 6, for eliminating viruses and bacteria present in the water to be purified.

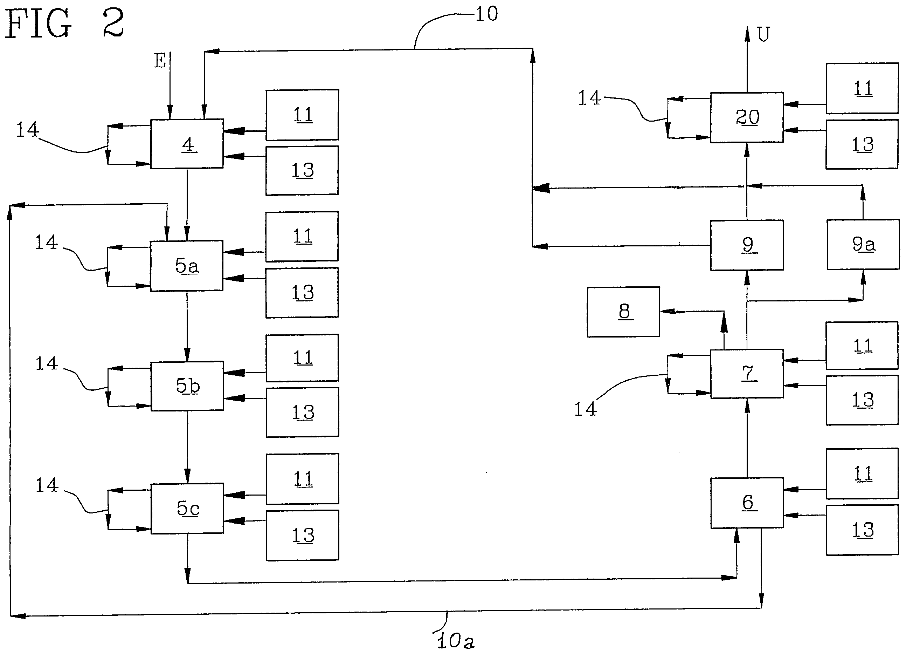

At this stage, the water can be let out through the pipeline 8 for surface drains, for example for irrigation use (see figure 2).

Alternatively, the water is made to flow through the said tangential filter 9 for obtaining drinking water. At this stage, a small amount of concentrate which can be handled by bringing it back to the starting point the depuration process through pipeline 10 better shown in the diagram of figure 2.

It shall be noted in particular that with the said double tangential filter system 9, 9a the water can be sent back to the starting point of the plant 1 through the said pipeline 10. In detail, the said tangential filters operate alternately; for example, when one of the tangential filters is exhausted or, even worse, out of order, it is automatically excluded and the water is deviated to the other filter.

Alternatively, the drinking water can be made to flow to a further final storage basin 20, suitable for distribution of the purified "oligomineral" water.

Each basin 2 is provided with at least one oxidation device preferably consisting of at least one ozone generator 11.

Such ozone generator 11 consists of an air generator, preferably a corona discharge generator, suitable for supplying ozone obtained directly from oxygen of the air.

For the purposes of the present invention, with the expression "obtained directly from oxygen of the air" it is meant that the ozone generator draws directly oxygen from ambient air and does not employ feeding systems, such as compressors and/or blowers, for feeding oxygen to the ozone generator.

The air ozone generator 11 is an electric appliance capable of artificially producing ozone through a corona discharge. In other words, the appliance generates an electric voltage which produces negatively charged ions and ozone.

Preferably, the ozone generator 11 has an efficiency in transforming ambient air into ozone higher than at least 70%, preferably higher than at least 80%.

The Applicant has found that by using an ozone generator of the above-mentioned kind it is no more required to provide, as in the prior art, a filtration system downstream the treatment basin for removing the excess of ozone, since a perfect mass balance between oxygen and required ozone can be achieved.

In particular, a respective ozone generator 11 is installed in each basin 2 close to an edge thereof, so that the ozone comes into contact with the water in a time less than 25 sec, preferably less than 20 sec, in any case more than 1 sec. The generator arranged close to the edge of the basin 2 is provided with an ozone blowing element 12, extending into the respective basin 2.

Therefore, the presence of the generator 11 at the basin edge avoids that the ozone is decomposed before coming into contact with the water and thus that treatment strength can be lost. By arranging the generator 11 near the respective basin 2, the ozone effectiveness at the moment of its production, i. e. in nascent state, is thus fully exploited.

For the purposes of the present invention, with the expression "ozone in nascent state" it is meant ozone in a time interval less than 30 sec from its generation by means of a suitable generator.

The blowing element 12 consists of an ozoneproof diffuser comprising at least one suction pump and at least one Venturi tube (not shown) arranged inside each basin 2.

The present choice, together with the kind of air ozone generator, allow forced systems for drawing air from the outside and feeding it to the ozone generator, such as compressors and blowers, to be eliminated.

In this way, the need for suitable air cooling systems and filters for eliminating air impurities arranged directly upstream the ozone generator is eliminated.

In each step described above and carried out in a respective basin 2, thus, bacteria are killed due to the action of the ozone. Moreover, ozone has strong oxidizing power and high effectiveness in killing viruses, thus ensuring a lower formation of reaction secondary compounds with organic substances remaining in the sewage.

Each basin 2 is further provided with a magnetic field emitter 13, arranged at each basin 2 for generating a magnetic field into the water to be purified.

Such emitter 13 is arranged at a recirculation pipeline 14, also provided for each basin 2.

The recirculation pipeline 14 has the function of increasing water speed, in order to lower the contact time with ozone and reducing the size of the plant.

Furthermore, the application of magnetic fields generated by the emitter 13 aims at preparing salts contained in the water and the water molecules themselves for the purification treatment. In fact, magnetic fields change the molecular structure of substances, making them more reactive to the purification process.

It shall be noted that the magnetic field emitter 13 can also be provided in the inlet pipeline 3 of the first oxidation basin 5a, and in the inlet duct 3 of the disinfection basin.

As a consequence, in each basin treated with the said magnetic fields, the water is prepared for optimizing the ozone action.

The plant 1 is further provided with a control software (not shown and described in detail) which allows the system to be remotely controlled and the intervention times for maintenance to be best-managed.

The plant 1 described above thus allows water to be effectively purified, with very low energy consumption, ensuring a better result and a reduction of the volumes required for treatment.

It shall be noted, in particular, that no chemicals are used which have to be managed and subsequently disposed. Furthermore, the use of ozone does not produce sludge or concentrates, with related advantages in terms of plant management costs.

In other words, the plant 1 does not cause secondary pollution, since ozone, after having reacted, turns into molecular oxygen and does not give rise to harmful residues.

## Claims

1. Water purification plant comprising:
at least one filtration means for a predetermined amount of water to be purified, for removing solid particles from the water to be purified;
a plurality of collection basins (2), for said water to be purified; and
a respective oxidation device arranged at each basin (2), for oxidizing water contained in the basin itself;
each oxidation device comprising a respective ozone generator (11) for delivering ozone in nascent state into the basin (2); said ozone generator comprising an air ozone generator for drawing ambient air and transforming it into ozone,
said ozone generator (11) being housed close to and edge of said basin (2) and comprises an ozone blowing element (12) extending into said basin (2),
said ozone blowing element (12) comprising at least one suction pump and at least one Venturi tube,
**characterized in that** said plurality of basins (2) are arranged one after the other and in fluid communication with each other so that the water is sent through said basins when the plant is in use;
**characterized in that** the plant further comprises a magnetic field emitter(13), arranged at each basin (2) for generating a magnetic field into the water to be purified, and
**in that** each basin further comprises a recirculation pipeline (14) for the water contained in the basin (2) itself; said magnetic field emitter (13) being arranged at the recirculation pipeline (14) in the respective basin (2).

2. Plant according to claim 1, **characterized in that** said ozone generator (11) is such to deliver ozone into the basin in a time less than 25 seconds.

3. Plant according to anyone of the claims 1 to 2, **characterized in that** said ozone generator (11) is a corona discharge air generator for drawing directly ambient air and transforming it into ozone.

4. Plant according to anyone of the previous claims, **characterized in that** said ozone generator (11) has an efficiency in transforming ambient air into ozone higher that at least 70%, preferably higher than at least 80%.

5. Plant according to any previous claims, **characterized by** comprising three oxidation basins (5a, 5b, 5c) for performing three consecutive oxidation steps on the water to be purified.

6. Plant according to claim 5, **characterized by** further comprising a storage basin (4), arranged upstream the oxidation basins (5a, 5b, 5c), for disgregating oils, fats and hydrocarbons present in the water to be purified.

7. Plant according to claim 5 or 6, **characterized by** further comprising a sedimentation basin (6) arranged downstream the oxidation basins (5a, 5b, 5c).

8. Plant according to claim 7, **characterized by** further comprising a disinfection basin (7), arranged downstream the sedimentation basin (6) for eliminating viruses and bacteria present in the water to be purified.

9. Plant according to any previous claims, **characterized in that** said filtration means comprises a pair of filtering elements (9), respectively arranged upstream and downstream said basins (2).

10. Plant according to any one of the claims 7 to 9, **characterized by** further comprising a recirculation pipeline (10a) extending from the sedimentation basin (6) to a first oxidation basin (5a); said recirculation pipeline defining a closed circuit connection for bringing back upstream the oxidation basins (5a, 5b, 5c) a predetermined amount of water leaving the sedimentation basin (6).

11. Plant according to claim 9, **characterized by** further comprising a double tangential filter system (9, 9a) arranged downstream the basins (2) and provided with a recirculation pipeline (10) for bringing back the water to the starting point of the purification plant (1).

## Patentansprüche

1. Wasseraufbereitungsanlage, umfassend:
mindestens ein Filtermittel für eine vorgegebene Menge an aufzubereitendem Wasser, um feste Partikel aus dem aufzubereitenden Wasser zu beseitigen;
eine Vielzahl an Sammelbecken (2) für das aufzubereitende Wasser und eine jeweilige Oxidationsvorrichtung, die an jedem Becken (2) angeordnet ist, um das im Becken enthaltene Wasser zu oxidieren;
wobei jede Oxidationsvorrichtung einen jeweiligen Ozongenerator (11) umfasst, um dem Becken (2) Ozon im naszierenden Zustand zuzuführen, wobei der Ozongenerator einen Luftozongenerator umfasst, um Raumluft anzusaugen und diese in Ozon zu verwandeln, wobei der Ozongenerator (11) in der Nähe einer Kante des Beckens (2) untergebracht ist und ein Ozonblaselement (12) umfasst, das sich in das Becken (2) erstreckt,
wobei das Ozonblaselement (12) mindestens eine Saugpumpe und mindestens ein Venturi-Rohr umfasst,
**dadurch gekennzeichnet, dass** die Vielzahl an Becken (2) nacheinander in Fluidkommunikation miteinander angeordnet ist, sodass das Wasser durch diese Becken geführt wird, wenn die Anlage in Gebrauch ist;
**dadurch gekennzeichnet, dass** die Anlage zudem einen Magnetfeldemitter (13) umfasst, der an jedem Becken (2) angeordnet ist, um im aufzubereitenden Wasser ein Magnetfeld zu erzeugen, und
dadurch, dass jedes Becken zudem eine Umwälzrohrleitung (14) für das im Becken (2) enthaltene Wasser aufweist, wobei der Magnetfeldemitter (13) in der Umwälzrohrleitung (14) im jeweiligen Becken (2) angeordnet ist.

2. Anlage nach Anspruch 1, **dadurch gekennzeichnet, dass** der Ozongenerator (11) so ausgelegt ist, dass er dem Becken in einer Zeit von weniger als 25 Sekunden Ozon zuführt.

3. Anlage nach einem der Ansprüche 1 oder 2, **dadurch gekennzeichnet, dass** der Ozongenerator (11) ein Corona-Entladungsluftgenerator ist, um Umgebungsluft direkt anzusaugen und in Ozon zu verwandeln.

4. Anlage nach einem der vorhergehenden Ansprüche, **dadurch gekennzeichnet, dass** der Ozongenerator (11) bei der Umwandlung von Umgebungsluft in Ozon einen Wirkungsgrad aufweist, der mindestens höher als 70 % ist, vorzugsweise höher als mindestens 80 %.

5. Anlage nach einem der vorhergehenden Ansprüche, **dadurch gekennzeichnet, dass** sie drei Oxidationsbecken (5a, 5b, 5c) umfasst, um drei aufeinanderfolgende Oxidationsschritte bezüglich des aufzubereitenden Wassers durchzuführen.

6. Anlage nach Anspruch 5, **dadurch gekennzeichnet, dass** sie zudem ein Speicherbecken (4) umfasst, das sich vor den Oxidationsbecken (5a, 5b, 5c) befindet, um Öle, Fette und Kohlenwasserstoffe, die im aufzubereitenden Wasser enthalten sind, abzuscheiden.

7. Anlage nach Anspruch 5 oder 6, **dadurch gekennzeichnet, dass** sie zudem ein Absetzbecken (6) umfasst, das nach den Oxidationsbecken (5a, 5b, 5c) angeordnet ist.

8. Anlage nach Anspruch 7, **dadurch gekennzeichnet, dass** sie zudem ein Desinfektionsbecken (7) umfasst, das nach dem Absetzbecken (6) angeordnet ist, um Viren und Bakterien, die im aufzubereitenden Wasser enthalten sind, zu beseitigen.

9. Anlage nach einem der vorhergehenden Ansprüche, **dadurch gekennzeichnet, dass** das Filtermittel ein Paar Filterelemente (9) umfasst, die jeweils vor und nach den Becken (2) angeordnet sind.

10. Anlage nach einem der Ansprüche 7 bis 9, **dadurch gekennzeichnet, dass** sie zudem eine Umwälzrohrleitung (10a) umfasst, die sich vom Absetzbecken (6) zu einem ersten Oxidationsbecken (5a) erstreckt, wobei die Umwälzrohrleitung eine geschlossene Kreislaufverbindung definiert, um eine vorgegebene Menge an Wasser, das aus dem Absetzbecken (6) ausströmt, zurück vor die Oxidationsbecken (5a, 5b, 5c) zu führen.

11. Anlage nach Anspruch 9, **dadurch gekennzeichnet, dass** sie zudem ein doppeltes Tangentialfiltersystem (9, 9a) umfasst, das nach den Becken (2) angeordnet und mit einer Umwälzrohrleitung (10) verssehen ist, um das Wasser zum Ausgangspunkt der Aufbereitungsanlage zurückzuführen.

## Revendications

1. Installation de purification d'eau comprenant :
au moins des moyens de filtration pour une quantité prédéterminée d'eau à purifier, qui permettent de retirer des particules solides de l'eau à purifier ;
une pluralité de bassins de collecte (2) pour ladite eau à purifier ; et un dispositif d'oxydation respectif disposé dans chaque bassin (2) pour oxyder l'eau contenue dans le bassin lui-même ;
chaque dispositif d'oxydation comprenant un générateur d'ozone respectif (11) pour délivrer l'ozone à l'état naissant dans le bassin (2) ; ledit générateur d'ozone comprenant un générateur d'ozone pour air de sorte à aspirer l'air ambiant et à le transformer en ozone,
ledit générateur d'ozone (11) étant monté à proximité d'un bord dudit bassin (2) et comprenant un élément souffleur d'ozone (12) se développant dans ledit bassin (2),
ledit élément souffleur d'ozone (12) comprenant au moins une pompe aspirante et au moins un tube de Venturi,
**caractérisée en ce que** ladite pluralité de bassins (2) sont disposés l'un après l'autre et en communication fluidique les uns avec les autres, de sorte que l'eau est acheminée à travers lesdits bassins quand l'installation fonctionne ;
**caractérisée en ce que** l'installation comprend également un émetteur de champ magnétique (13) monté dans chaque bassin (2) pour générer un champ magnétique dans l'eau à purifier, et
**en ce que** chaque bassin comprend aussi une conduite de recirculation (14) pour l'eau contenue dans le bassin (2) ; ledit émetteur de champ magnétique (13) étant monté sur la conduite de recirculation (14) dans le bassin respectif (2).

2. Installation selon la revendication 1, **caractérisée en ce que** ledit générateur d'ozone (11) est capable de délivrer l'ozone dans le bassin en moins de 25 secondes.

3. Installation selon l'une quelconque des revendications 1 à 2, **caractérisée en ce que** ledit générateur d'ozone (11) est un générateur d'air à décharge corona pour aspirer directement l'air ambiant et pour le transformer en ozone.

4. Installation selon l'une quelconque des revendications précédentes, **caractérisée en ce que** ledit générateur d'ozone (11) a une efficacité de transformation de l'air ambiant en ozone, supérieure à 70 % au moins, de préférence supérieure à 80 % au moins.

5. Installation selon l'une quelconque des revendications précédentes, **caractérisée en ce qu'**elle comprend trois bassins d'oxydation (5a, 5b, 5c) pour effectuer trois étapes consécutives d'oxydation sur l'eau à purifier.

6. Installation selon la revendication 5, **caractérisée en ce qu'**elle comprend également un bassin de stockage (4), disposé en amont des bassins d'oxydation (5a, 5b, 5c), pour désagréger les huiles, les graisses et les hydrocarbures contenus dans l'eau à purifier.

7. Installation selon les revendications 5 ou 6, **caractérisée en ce qu'**elle comprend aussi un bassin de sédimentation (6) disposé en aval des bassins d'oxydation (5a, 5b, 5c).

8. Installation selon la revendication 7, **caractérisée en ce qu'**elle comprend aussi un bassin de désinfection (7), disposé en aval du bassin de sédimentation (6), pour éliminer les virus et les bactéries contenus dans l'eau à purifier.

9. Installation selon l'une quelconque des revendications précédentes, **caractérisée en ce que** lesdits moyens de filtration comprennent une paire d'éléments de filtration (9), disposés respectivement en amont et en aval desdits bassins (2).

10. Installation selon l'une quelconque des revendications 7 à 9, **caractérisée en ce qu'**elle comprend aussi une conduite de recirculation (10a) se développant du bassin de sédimentation (6) à un premier bassin d'oxydation (5a) ; ladite conduite de recirculation définissant un raccordement à circuit fermé pour ramener en amont des bassins d'oxydation (5a, 5b, 5c) une quantité prédéterminée d'eau laissant le bassin de sédimentation (6).

11. Installation selon la revendication 9, **caractérisée en ce qu'**elle comprend également un système à double filtre tangentiel (9, 9a) situé en aval des bassins (2) et équipé d'une conduite de recirculation (10) pour ramener l'eau au point de départ de l'installation de purification.
